# EUROPEAN PATENT APPLICATION

(11) **EP 4 734 231 A1**
(43) Date of publication of application: **29.04.2026**
(21) Application number: 25782885.5
(22) Date of filing: 31.03.2025
(51) Int. Cl.: H01M 10/653, H01M 10/625, H01M 10/6554, H01M 10/6556, H01M 10/617

(54) **BATTERY PACK**

(30) Priority: 05.04.2024 KR 20240046509
(71) Applicant: LG Energy Solution, Ltd., Seoul 07335 (KR)
(72) Inventor: HUR, Nam Hoon, Daejeon 34122 (KR); SHIN, Ju Hwan, Daejeon 34122 (KR); KIM, Ki Young, Daejeon 34122 (KR); HWANG, In Ho, Daejeon 34122 (KR)
(74) Representative: Plasseraud IP
(86) International application number: PCT/KR2025/004132
(87) International publication number: WO 2025/211662

(57) **Abstract**

The technical idea of the present disclosure provides a battery pack including: a base frame; a cell block including a plurality of battery cells on the base frame; a cooling structure provided on the cell block and having a first cooling channel; and a heat transfer structure thermally connecting the cell block to the cooling structure and including a plurality of thermal conductive pads attached to the cell block and a plurality of thermal conductive rails attached to the cooling structure; wherein the plurality of thermal conductive rails are arranged in a first direction on the cell block, and two adjacent thermal conductive rails among the plurality of thermal conductive rails overlap in a second direction.

## Description

### [Technical Field]

The present disclosure relates to a battery pack.

This application claims the benefit of priority from Korean Patent Application No. 10-2024-0046509, filed on April 05, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

As secondary batteries are used in mobility, the demand for the safety of secondary batteries is increasing. In the event of a fire occurrence in a secondary battery used for mobility, it can endanger the driver's life, and thus, research on technologies to improve the safety of secondary batteries is indispensable.

### [Summary]

### [Technical Problem]

The technical problem to be solved by the present disclosure is to provide a battery pack.

### [Technical Solution]

To solve the above-described problem, the technical idea of the present disclosure provides a battery pack including: a base frame; a cell block including a plurality of battery cells on the base frame; a cooling structure provided on the cell block and having a first cooling channel; and a heat transfer structure thermally connecting the cell block to the cooling structure and including a plurality of thermal conductive pads attached to the cell block and a plurality of thermal conductive rails attached to the cooling structure; wherein the plurality of thermal conductive rails are arranged in a first direction on the cell block, and two adjacent thermal conductive rails among the plurality of thermal conductive rails overlap in a second direction.

In exemplary embodiments, further including a first thermal conductive adhesive layer that attaches each of the plurality of thermal conductive rails to the cooling structure.

In exemplary embodiments, the base frame includes a second cooling channel, and the battery pack further includes a second thermal conductive adhesive layer that attaches each of the plurality of battery cells to the base frame.

In exemplary embodiments, each of the plurality of thermal conductive pads is attached to a corresponding one among the plurality of battery cells, and each of the plurality of thermal conductive rails is integral with a corresponding one among the plurality of thermal conductive pads.

In exemplary embodiments, each of the plurality of thermal conductive rails includes a first plate and a second plate positioned at different levels, and a second plate of any one of two adjacent thermal conductive rails among the plurality of thermal conductive rails overlaps a first plate of the other one of the two adjacent thermal conductive rails among the plurality of thermal conductive rails in the second direction.

In exemplary embodiments, the first plate overlaps a corresponding one among the plurality of battery cells in the second direction, and the second plate overlaps corresponding two battery cells among the plurality of battery cells in the second direction.

In exemplary embodiments, the cooling structure includes a first cooling plate and a second cooling plate spaced apart with an opening therebetween, and each of the plurality of battery cells overlaps the opening in the second direction.

In exemplary embodiments, the cooling structure further includes a connecting plate extending between the first cooling plate and the second cooling plate, the first cooling plate includes a first channel configured to guide cooling fluid in a first flow direction, the second cooling plate includes a second channel configured to guide cooling fluid in a second flow direction opposite to the first flow direction, and the connecting plate includes a third channel extending between the first channel of the first cooling plate and the second channel of the second cooling plate, and wherein the first cooling channel includes the first channel, the second channel and the third channel.

In exemplary embodiments, further including: an inlet pipe including a first inlet channel communicating with the first channel of the first cooling plate and configured to deliver the cooling fluid to the first channel of the first cooling plate; and an outlet pipe including a first outlet channel communicating with the second channel of the second cooling plate and configured to discharge the cooling fluid to the outside.

In exemplary embodiments, the base frame includes a second cooling channel, the inlet pipe further includes a second inlet channel communicating with an inlet of the second cooling channel of the base frame, and the outlet pipe further includes a second outlet channel communicating with an outlet of the second cooling channel of the base frame.

In exemplary embodiments, each of the plurality of battery cells includes: a center portion overlapping the opening of the cooling structure in the second direction; and an outer portion overlapping one of the first cooling plate and the second cooling plate in the second direction and to which an electrode lead is connected.

In exemplary embodiments, the plurality of battery cells is arranged in the first direction, and each of the plurality of battery cells extends in a third direction perpendicular to the first direction and the second direction.

In exemplary embodiments, further including: an internal frame disposed on the base frame and disposed at one side of the cell block; and a fixing bracket fixing the cooling structure to the internal frame.

In exemplary embodiments, further including: a pack cover covering the cell block and the cooling structure; and a compressible pad provided between the cooling structure and the pack cover.

In exemplary embodiments, further including: a pack cover covering the cell block and the cooling structure; a bolt attached to the cooling structure and inserted into a hole of the pack cover; and a nut fastened to a protruding portion of the bolt protruding from the pack cover.

### [Advantageous Effects]

According to exemplary embodiments of the present disclosure, since the battery pack has a dual cooling structure configured to cool the battery cells by flowing cooling fluid to a lower cooling channel of the base frame below the cell assembly and a cooling channel of the cooling structure above the cell assembly, cooling performance for the battery cells can be improved.

According to exemplary embodiments of the present disclosure, since the outer portion of the battery cell, which generates relatively more heat, is thermally coupled to the cooling structure through the heat transfer structure, cooling of the outer portion of the battery cell can be enhanced, and temperature deviation within the battery cell can be reduced.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a cross-sectional view illustrating a battery pack according to exemplary embodiments of the present disclosure.
FIG. 2 is an exploded perspective view illustrating a portion of a cell assembly according to exemplary embodiments of the present disclosure.
FIG. 3 is a perspective view illustrating a portion of a heat transfer structure according to exemplary embodiments of the present disclosure.
FIG. 4 is an exploded perspective view illustrating a portion of a heat transfer structure according to exemplary embodiments of the present disclosure.
FIG. 5 is a perspective view illustrating a battery pack according to exemplary embodiments of the present disclosure.
FIG. 6 is a perspective view illustrating a portion of a battery pack according to exemplary embodiments of the present disclosure.
FIG. 7 is a perspective view illustrating a portion of a cooling structure of a battery pack according to exemplary embodiments of the present disclosure.
FIG. 8 is a cross-sectional view illustrating a portion of a battery pack according to exemplary embodiments of the present disclosure.
FIG. 9a to FIG. 9d are cross-sectional views illustrating a manufacturing method of a battery pack according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of filing the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

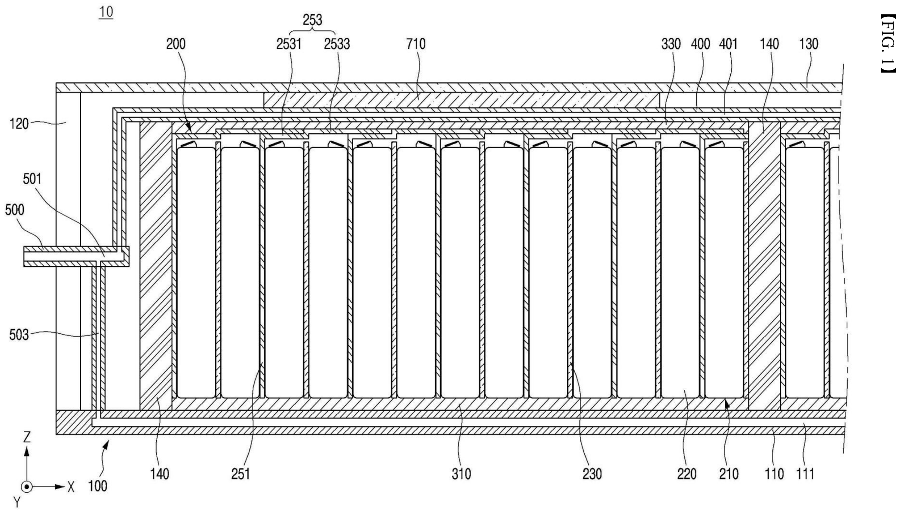

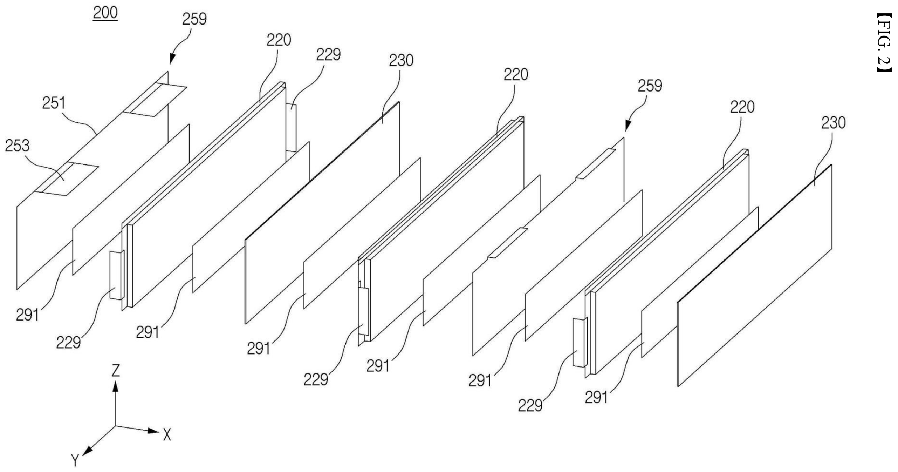

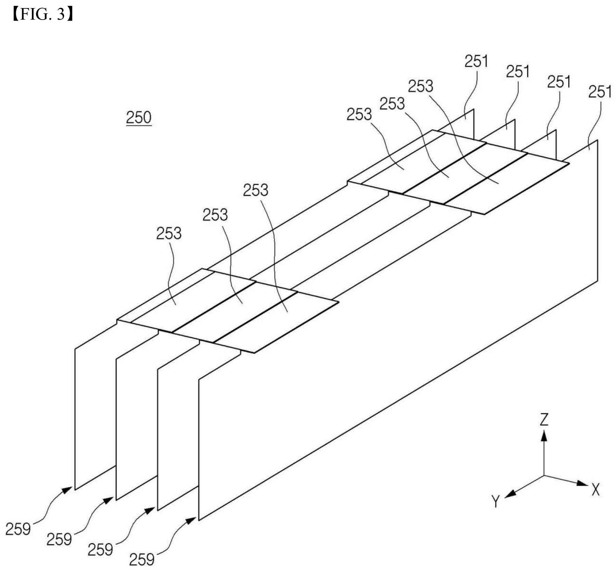

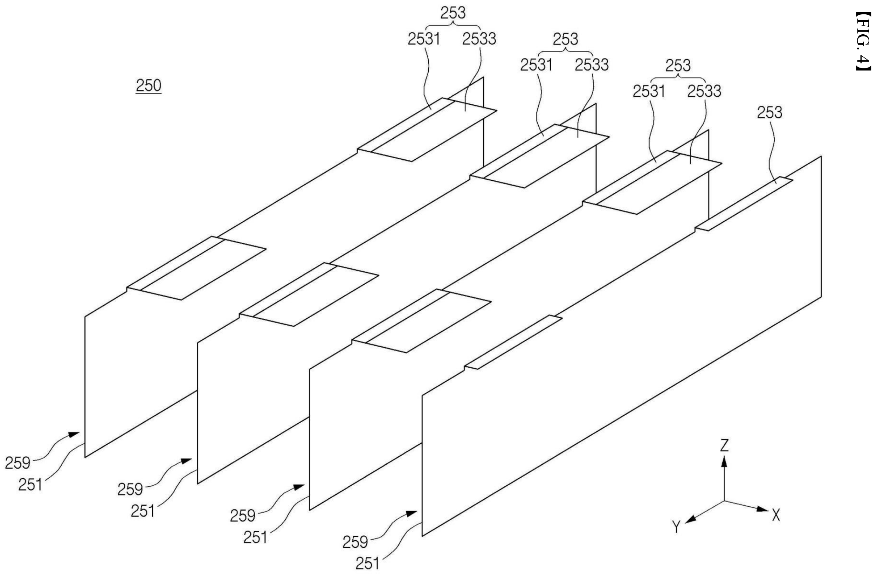

FIG. 1 is a cross-sectional view illustrating a battery pack 10 according to exemplary embodiments of the present disclosure. FIG. 2 is an exploded perspective view illustrating a portion of a cell assembly 200 according to exemplary embodiments of the present disclosure. FIG. 3 is a perspective view illustrating a portion of a heat transfer structure 250 according to exemplary embodiments of the present disclosure. FIG. 4 is an exploded perspective view illustrating a portion of a heat transfer structure 250 according to exemplary embodiments of the present disclosure.

Referring to FIG. 1 to FIG. 4, the battery pack 10 may include a pack frame 100, a cell assembly 200, a cooling structure 400, a pipe 500, and a compressible pad 710.

The pack frame 100 may provide an internal space accommodating the cell assembly 200. The pack frame 100 may include a base frame 110, a side frame 120, a pack cover 130, and a plurality of internal frames 140.

The base frame 110 may support the cell assembly 200. The base frame 110 may have a plate shape extending in approximately a first horizontal direction (e.g., X-direction) and a second horizontal direction (e.g., Y-direction). A plurality of cell assemblies 200 arranged in the first horizontal direction (e.g., X-direction) and the second horizontal direction (e.g., Y-direction) may be provided on the base frame 110.

The base frame 110 may include a lower cooling channel 111 configured to allow cooling fluid to flow. Cooling fluid provided from outside of the battery pack 10 may be supplied to an inlet of the lower cooling channel 111, flow along the lower cooling channel 111, and be discharged to the outside through an outlet of the lower cooling channel 111. While the cooling fluid flows along the lower cooling channel 111, cooling of the cell assembly 200 may be achieved. The cooling fluid may include coolant and/or refrigerant.

The side frame 120 may extend along a periphery of the base frame 110 and may surround the cell assembly 200.

The pack cover 130 may be fastened on the side frame 120 to cover the cell assembly 200. The pack cover 130 may have a plate shape extending in the first horizontal direction (e.g., X-direction) and the second horizontal direction (e.g., Y-direction).

The plurality of internal frames 140 may partition the internal space of the pack frame 100 into a plurality of accommodation spaces. One or more cell assemblies 200 may be disposed in each of the plurality of accommodation spaces of the pack frame 100 defined by the plurality of internal frames 140. In exemplary embodiments, the plurality of internal frames 140 may be spaced apart from each other in the first horizontal direction (e.g., X-direction), and the individual internal frame 140 may extend in the second horizontal direction (e.g., Y-direction). One cell assembly 200 may be disposed between a pair of internal frames 140.

The cell assembly 200 may include a cell block 210, a thermal barrier pad 230, and a heat transfer structure 250.

The cell block 210 may include a plurality of battery cells 220. The individual battery cell 220 is a lithium-ion battery, i.e., a basic unit of a secondary battery. The individual battery cell 220 may include an electrode assembly, electrolyte, and a cell case. The electrode assembly embedded in the cell case may include a positive electrode, a negative electrode, and a separator interposed between the positive electrode and the negative electrode. The electrode assembly may be either a jelly-roll type or a stack type depending on the assembly form. A jelly-roll type electrode assembly may include a winding structure of a positive electrode, a negative electrode, and a separator interposed therebetween. A stack type electrode assembly may include a plurality of positive electrodes, a plurality of negative electrodes, and a plurality of separators interposed therebetween that are sequentially stacked. The positive electrode may include a positive electrode current collector and a positive electrode active material. The negative electrode may include a negative electrode current collector and a negative electrode active material

The individual battery cell 220 may correspond to a pouch-type battery cell, a cylindrical battery cell, or a prismatic battery cell. An electrode assembly of a pouch-type battery cell is embedded in a pouch case including an aluminum laminate sheet. An electrode assembly of a cylindrical battery cell is embedded in a cylindrical metal can. An electrode assembly of a prismatic battery cell is embedded in a prismatic metal can.

The plurality of battery cells 220 provided in the cell assembly 200 may be connected in series and/or parallel. For example, the plurality of battery cells 220 may be connected to each other in series. For example, the plurality of battery cells 220 may be connected to each other in parallel. For example, when a collection of two or more battery cells 220 connected to each other in parallel is defined as a bank, one bank consisting of two or more battery cells 220 connected to each other in parallel and another bank consisting of two or more battery cells 220 connected to each other in parallel may be connected in series.

In exemplary embodiments, the plurality of battery cells 220 provided in the cell assembly 200 may be arranged in the first horizontal direction (e.g., X-direction), and the individual battery cell 220 may extend in the second horizontal direction (e.g., Y-direction). An electrode lead 229 may be provided at at least one of both ends of the individual battery cell 220 along the second horizontal direction (e.g., Y-direction). The individual battery cell 220 may have a center portion and a pair of outer portions, and an electrode lead 229 may be connected to each of the pair of outer portions of the individual battery cell 220. Electrode leads 229 of neighboring battery cells 220 among the plurality of battery cells 220 may be electrically and physically connected to each other.

The thermal barrier pad 230 may be disposed between the battery cells 220. The thermal barrier pad 230 may have a plate shape extending in approximately the second horizontal direction (e.g., Y-direction) and the vertical direction (e.g., Z-direction). At least one of both sides of the thermal barrier pad 230 may be in contact with the battery cell 220. The thermal barrier pad 230 may be attached to a corresponding battery cell 220 by an adhesive member 291 such as double-sided tape or adhesive. The cell assembly 200 may include a plurality of thermal barrier pads 230. At least one battery cell 220 may be disposed between two adjacent thermal barrier pads 230. The thermal barrier pad 230 may be disposed between the battery cells 220 to prevent or suppress thermal propagation between the battery cells 220. In addition, the thermal barrier pad 230 may be configured to elastically deform by external force and may be configured to support a corresponding battery cell 220. When the thickness of the battery cell 220 along the first horizontal direction (e.g., X-direction) increases due to swelling of the battery cell 220, the thermal barrier pad 230 may elastically deform to absorb or disperse the force acting due to swelling of the corresponding battery cell 220. In exemplary embodiments, the thermal barrier pad 230 may include polyurethane, silicone, or a combination thereof.

The heat transfer structure 250 may thermally connect the cell block 210 to the cooling structure 400. The heat transfer structure 250 may be attached to each of the plurality of battery cells 220 and may be attached to the cooling structure 400. The heat transfer structure 250 may provide a heat transfer path for thermally coupling each of the plurality of battery cells 220 to the cooling structure 400. The heat transfer structure 250 may include a material having excellent thermal conductivity, for example, copper, silver, gold, aluminum, tungsten, or a combination thereof. The thermal conductivity of the material of the heat transfer structure 250 may be greater than the thermal conductivity of the material of the thermal barrier pad 230.

The heat transfer structure 250 may include a plurality of thermal conductive pads 251 attached to the cell block 210 and a plurality of thermal conductive rails 253 provided on the cell block 210.

The plurality of thermal conductive pads 251 may each be attached to one or more corresponding battery cells 220 among the plurality of battery cells 220. The individual thermal conductive pad 251 may have a plate shape extending in approximately the second horizontal direction (e.g., Y-direction) and the vertical direction (e.g., Z-direction). At least one of both sides of the individual thermal conductive pad 251 may be in contact with the battery cell 220. The individual thermal conductive pad 251 may be attached to an adjacent battery cell 220 by an adhesive member 291.

In the cell assembly 200, the plurality of battery cells 220 may be arranged in the first horizontal direction (e.g., X-direction), and the thermal conductive pads 251 and the thermal barrier pads 230 may be alternately and repeatedly arranged in the first horizontal direction (e.g., X-direction). In exemplary embodiments, one side of the individual battery cell 220 may be attached to a thermal conductive pad 251 by an adhesive member 291, and the other side of the individual battery cell 220 may be attached to a thermal barrier pad 230 by an adhesive member 291.

The cell assembly 200 may be thermally and physically coupled to the base frame 110 by a lower thermal conductive adhesive layer 310. The lower thermal conductive adhesive layer 310 may directly contact each of the plurality of battery cells 220 and each of the plurality of thermal conductive pads 251. The lower thermal conductive adhesive layer 310 may include thermal resin and/or thermal interface material.

The plurality of thermal conductive rails 253 are provided on the cell block 210 and may be arranged in the first horizontal direction (e.g., X-direction). Two neighboring thermal conductive rails 253 among the plurality of thermal conductive rails 253 may contact each other. The plurality of thermal conductive rails 253 may each be integral with a corresponding thermal conductive pad 251 among the plurality of thermal conductive pads 251. A thermal conductive rail 253 and a thermal conductive pad 251 that are integral with each other may constitute a heat transfer fin 259. The heat transfer structure 250 may comprise a plurality of heat transfer fins 259 aligned in the first horizontal direction (e.g., X-direction).

The plurality of thermal conductive rails 253 may cover a portion of an upper surface of the cell block 210 but may not cover another portion of the upper surface of the cell block 210. In exemplary embodiments, the plurality of thermal conductive rails 253 may cover a pair of outer portions of the individual battery cell 220 to which the electrode leads 229 are connected, but may not cover a center portion of the individual battery cell 220. In exemplary embodiments, the plurality of thermal conductive rails 253 may include a first group of thermal conductive rails 253 and a second group of thermal conductive rails 253 spaced apart in the second horizontal direction (e.g., Y-direction). The first group of thermal conductive rails 253 may be arranged in the first horizontal direction (e.g., X-direction), and the second group of thermal conductive rails 253 may be arranged in the first horizontal direction (e.g., X-direction). The first group of thermal conductive rails 253 may cover one outer portion of each of the plurality of battery cells 220, and the second group of thermal conductive rails 253 may cover another outer portion of each of the plurality of battery cells 220. An opening overlapping a center portion of each of the plurality of battery cells 220 in the vertical direction (e.g., Z-direction) may be provided between the first group of thermal conductive rails 253 and the second group of thermal conductive rails 253.

The individual thermal conductive rail 253 may have a stepped structure. The individual thermal conductive rail 253 may include a first plate 2531 at a first vertical level and a second plate 2533 at a second vertical level different from the first vertical level. Here, the vertical level may refer to a position along the vertical direction (e.g., Z-direction). A distance along the vertical direction (e.g., Z-direction) between the first plate 2531 and the cooling structure 400 may be greater than a distance along the vertical direction (e.g., Z-direction) between the second plate 2533 and the cooling structure 400.

In exemplary embodiments, the length of the second plate 2533 of the individual thermal conductive rail 253 along the first horizontal direction (e.g., X-direction) may be greater than the length of the first plate 2531 of the individual thermal conductive rail 253 along the first horizontal direction (e.g., X-direction). The first plate 2531 of the individual thermal conductive rail 253 may overlap a corresponding one among the plurality of battery cells 220 in the vertical direction (e.g., Z-direction). The second plate 2533 of the individual thermal conductive rail 253 may overlap corresponding two battery cells 220 among the plurality of battery cells 220 in the vertical direction (e.g., Z-direction).

Two thermal conductive rails 253 adjacent in the first horizontal direction (e.g., X-direction) among the plurality of thermal conductive rails 253 may overlap in the vertical direction (e.g., Z-direction). A portion of one of the two thermal conductive rails 253 may overlap a portion of the other one of the two thermal conductive rails 253 in the vertical direction (e.g., Z-direction). The second plate 2533 of one of the two thermal conductive rails 253 may overlap the first plate 2531 of the other one of the two thermal conductive rails 253 in the vertical direction (e.g., Z-direction). The bottom surface of the second plate 2533 of one of the two thermal conductive rails 253 may contact the upper surface of the first plate 2531 of the other one of the two thermal conductive rails 253. In this case, the individual battery cell 220 may overlap the second plate 2533 of one of the two thermal conductive rails 253 and the first plate 2531 of the other one of the two thermal conductive rails 253 in the vertical direction (e.g., Z-direction).

According to exemplary embodiments of the present disclosure, since the plurality of heat transfer fins 259 in the heat transfer structure 250 are arranged to have an overlapping structure overlapping with each other, rigidity of the cell assembly 200 including the heat transfer structure 250 may be improved.

The cooling structure 400 may be disposed on the cell assembly 200. The cooling structure 400 may cover the plurality of battery cells 220 and the heat transfer structure 250. The cooling structure 400 may include a cooling channel 401 configured to allow cooling fluid to flow. Cooling fluid provided from outside of the battery pack 10 may be supplied to an inlet of the cooling channel 401, flow along the cooling channel 401, and be discharged to the outside through an outlet of the cooling channel 401. While the cooling fluid flows along the cooling channel 401, cooling of the cell assembly 200 may be achieved.

The cell assembly 200 may be thermally and physically coupled to the cooling structure 400 by an upper thermal conductive adhesive layer 330. The upper thermal conductive adhesive layer 330 may be interposed between the plurality of thermal conductive rails 253 and the cooling structure 400. The upper thermal conductive adhesive layer 330 may thermally and physically couple the plurality of thermal conductive rails 253 to the cooling structure 400. The upper thermal conductive adhesive layer 330 may include thermal resin and/or thermal interface material.

The pipe 500 may be mounted to the pack frame 100 and may be configured to deliver cooling fluid. For example, the pipe 500 may be mounted to the side frame 120. The pipe 500 may include a first channel 501 communicating with the cooling channel 401 of the cooling structure 400 and a second channel 503 communicating with the lower cooling channel 111 of the base frame 110. In exemplary embodiments, the first channel 501 of the pipe 500 may be an inlet channel configured to deliver cooling fluid supplied from an external cooling fluid supply to an inlet of the cooling channel 401 of the cooling structure 400, and the second channel 503 of the pipe 500 may be an inlet channel configured to deliver cooling fluid supplied from an external cooling fluid supply to an inlet of the lower cooling channel 111 of the base frame 110. In exemplary embodiments, the first channel 501 of the pipe 500 may be an outlet channel configured to deliver cooling fluid discharged from an outlet of the cooling channel 401 to the cooling fluid supply, and the second channel 503 of the pipe 500 may be an outlet channel configured to deliver cooling fluid discharged from an outlet of the lower cooling channel 111 to the cooling fluid supply.

The compressible pad 710 may be provided between the cooling structure 400 and the pack cover 130. The compressible pad 710 may be attached to the cooling structure 400 and/or the pack cover 130. The compressible pad 710 may be configured to elastically deform by external force. For example, the compressible pad 710 may include polyurethane, silicone, or a combination thereof. The compressible pad 710 may improve durability of the battery pack 10 by reducing vibration of the pack cover 130.

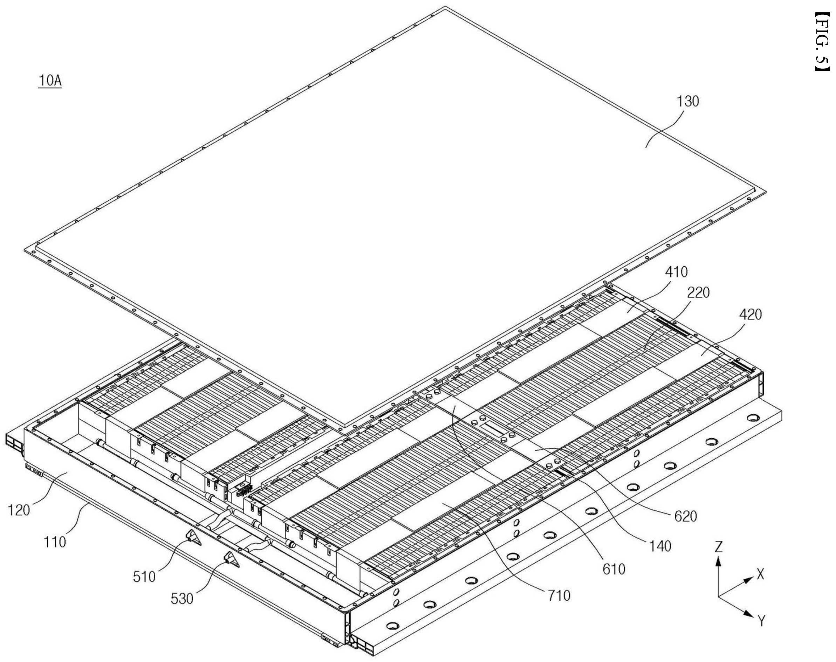

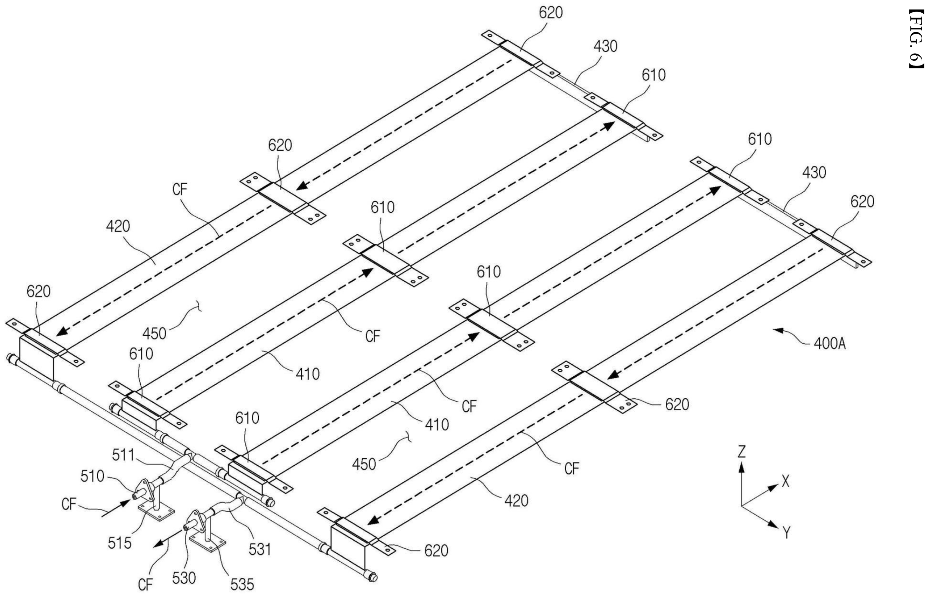

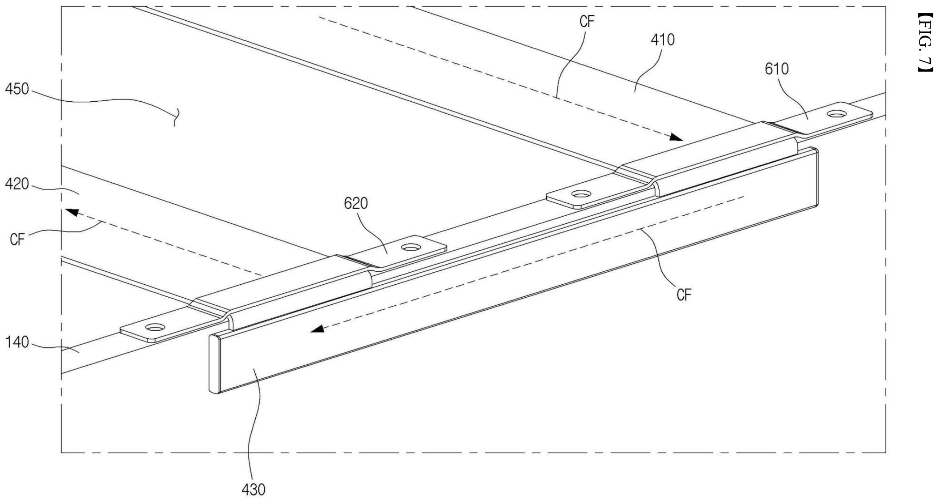

FIG. 5 is a perspective view illustrating a battery pack 10A according to exemplary embodiments of the present disclosure. FIG. 6 is a perspective view illustrating a portion of the battery pack 10A according to exemplary embodiments of the present disclosure. FIG. 7 is a perspective view illustrating a portion of a cooling structure 400A of the battery pack 10A according to exemplary embodiments of the present disclosure.

Referring to FIG. 5 to FIG. 7, a cooling structure 400A of the battery pack 10A may include a first cooling plate 410, a second cooling plate 420, and a connecting plate 430. The first cooling plate 410 and the second cooling plate 420 may each extend in a first horizontal direction (e.g., X-direction). In exemplary embodiments, the first cooling plate 410 and the second cooling plate 420 may extend in the first horizontal direction (e.g., X-direction) to cover two or more cell assemblies 200 arranged in the first horizontal direction (e.g., X-direction). The first cooling plate 410 and the second cooling plate 420 may be spaced apart in a second horizontal direction (e.g., Y-direction) with an opening 450 therebetween. The connecting plate 430 may extend between an end of the first cooling plate 410 and an end of the second cooling plate 420.

The first cooling plate 410 may include a first channel configured to guide cooling fluid (CF) in a first flow direction. The second cooling plate 420 may include a second channel configured to guide cooling fluid (CF) in a second flow direction opposite to the first flow direction. The connecting plate 430 may include a third channel extending between the first channel of the first cooling plate 410 and the second channel of the second cooling plate 420. The first channel of the first cooling plate 410 may communicate with the second channel of the second cooling plate 420 through the third channel of the connecting plate 430.

The battery pack 10A may include a fixing bracket for fixing the cooling structure 400A to a pack frame 100. The battery pack 10A may include a first fixing bracket 610 for fixing the first cooling plate 410 to the pack frame 100 and a second fixing bracket 620 for fixing the second cooling plate 420 to the pack frame 100. The first fixing bracket 610 may be coupled to the first cooling plate 410 by welding and may be fastened to a corresponding internal frame 140 by a fastening member such as a bolt. The second fixing bracket 620 may be coupled to the second cooling plate 420 by welding and may be fastened to a corresponding internal frame 140 by a fastening member such as a bolt.

The battery pack 10A may include an inlet pipe 510 through which cooling fluid (CF) provided from outside is introduced and an outlet pipe 530 through which cooling fluid (CF) is discharged to the outside.

The inlet pipe 510 may include a first portion 511 having a first inlet channel communicating with an inlet of the first channel of the first cooling plate 410 and a second portion 515 having a second inlet channel communicating with an inlet of a lower cooling channel 111 of a base frame 110. Cooling fluid (CF) provided from outside may be delivered to the first channel of the first cooling plate 410 through the first inlet channel of the inlet pipe 510, and may be delivered to the lower cooling channel 111 of the base frame 110 through the second inlet channel of the inlet pipe 510. Within the inlet pipe 510, the first inlet channel and the second inlet channel may communicate with each other, and cooling fluid provided to an inlet of the inlet pipe 510 may be separated into the first inlet channel and the second inlet channel.

The outlet pipe 530 may include a first portion 531 having a first outlet channel communicating with an outlet of the second channel of the second cooling plate 420 and a second portion 535 having a second outlet channel communicating with an outlet of the lower cooling channel 111 of the base frame 110. The first outlet channel of the outlet pipe 530 may deliver cooling fluid (CF) discharged from the second channel of the second cooling plate 420 to the outside. The second outlet channel of the outlet pipe 530 may deliver cooling fluid (CF) discharged from the lower cooling channel 111 of the base frame 110 to the outside. Within the outlet pipe 530, the first outlet channel and the second outlet channel may communicate with each other, and cooling fluid discharged from the second channel of the second cooling plate 420 and the lower cooling channel 111 of the base frame 110 may converge within the outlet pipe 530.

The first inlet channel of the inlet pipe 510, the first channel of the first cooling plate 410, the third channel of the connecting plate 430, the second channel of the second cooling plate 420, and the first outlet channel of the outlet pipe 530 may be sequentially connected and may constitute a first flow path of cooling fluid (CF). The second inlet channel of the inlet pipe 510, the lower cooling channel 111 of the base frame 110, and the second outlet channel of the outlet pipe 530 may be sequentially connected and may constitute a second flow path of cooling fluid (CF).

According to exemplary embodiments of the present disclosure, since the battery pack 10A has a dual cooling structure configured to cool battery cells 220 by flowing cooling fluid (CF) to the lower cooling channel 111 of the base frame 110 below cell assemblies 200 and cooling channels in the first cooling plate 410, the second cooling plate 420 and the connecting plate 430 of the cooling structure 400A above the cell assemblies 200, cooling performance for the battery cells 220 can be improved.

In exemplary embodiments, the first cooling plate 410 may cover one outer portion of each of a plurality of battery cells 220, and the second cooling plate 420 may cover another outer portion of each of the plurality of battery cells 220. The opening 450 provided between the first cooling plate 410 and the second cooling plate 420 may overlap a center portion of each of the plurality of battery cells 220 in a vertical direction (e.g., Z-direction). In this case, a pair of outer portions of individual battery cells 220 to which electrode leads 229 are connected may overlap the first cooling plate 410 and the second cooling plate 420 respectively in the vertical direction (e.g., Z-direction), and a center portion of the individual battery cells 220 may overlap the opening 450 of the cooling structure 400A in the vertical direction (e.g., Z-direction).

In exemplary embodiments, the opening 450 of the cooling structure 400A may provide a venting passage through which high-temperature gas generated from the plurality of battery cells 220 flows and a passage through which wireless signals are transmitted to components such as a Battery Management System (BMS). Since the cooling structure 400A has the opening 450, when a thermal event such as thermal runaway occurs, high-temperature gas generated from the battery cells 220 may be vented upward through the opening 450 of the cooling plates.

Generally, heat generation of individual battery cells 220 occurs more at outer portions of the battery cells 220 where electrode leads 229 are connected than at center portions of the battery cells 220. According to exemplary embodiments, since outer portions of the battery cells 220 that generate relatively more heat are thermally coupled to the cooling structure 400A through a heat transfer structure 250, cooling of the outer portions of the battery cells 220 can be enhanced, and temperature deviation within the battery cells 220 can be reduced.

### (second embodiment)

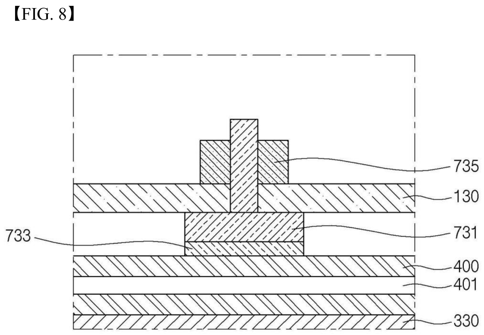

FIG. 8 is a cross-sectional view illustrating a portion of a battery pack according to exemplary embodiments of the present disclosure.

Referring to FIG. 8, the battery pack may include a bolt 731 attached to a cooling structure 400 and a nut 735 fastened to the bolt 731.

The bolt 731 may be coupled to the cooling structure 400. For example, the bolt 731 may be coupled to the cooling structure 400 by a joint 733 formed through welding. For example, the bolt 731 is a projection stud and may be coupled to the cooling structure 400 by projection welding. The bolt 731 may be inserted into a hole of a pack cover 130, and the bolt 731 may include a protruding portion protruding outward from the pack cover 130. The nut 735 may be threaded onto the protruding portion of the bolt 731 that is outside the pack cover 130. An inner circumferential surface of the nut 735 may be provided with threads that engage with threads provided on an outer circumferential surface of the protruding portion of the bolt 731. By threading the nut 735 onto the protruding portion of the bolt 731, the cooling structure 400 may be fixed to the pack cover 130. In exemplary embodiments, the cooling structure 400 may be fixed to the pack cover 130 by the bolt 731 and the nut 735, and a compressible pad (710 in FIG. 1) may be provided between the cooling structure 400 and the pack cover 130. Since the pack cover 130 is fixed to the cooling structure 400 by the bolt 731 and the nut 735, vibration of the pack cover 130 can be reduced, and durability of the battery pack can be improved.

### (third embodiment)

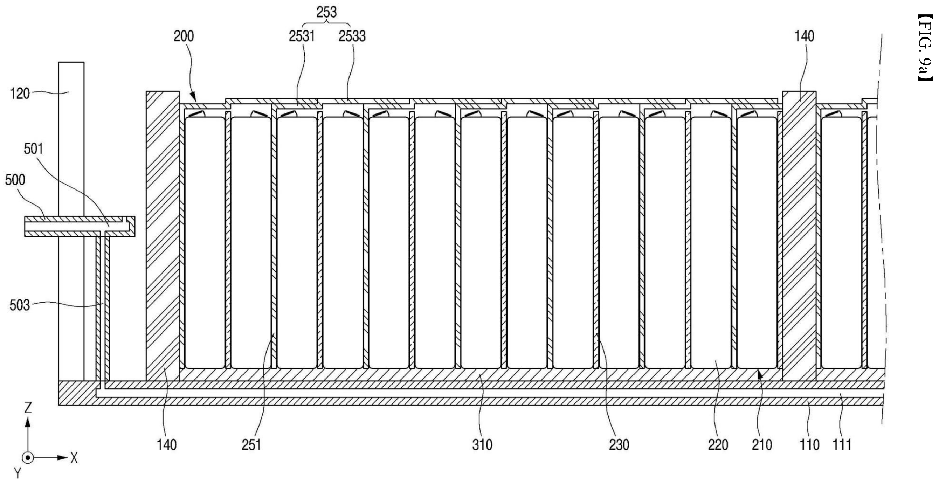

FIG. 9a to FIG. 9d are cross-sectional views illustrating a manufacturing method of a battery pack according to exemplary embodiments of the present disclosure.

Referring to FIG. 9a, a cell assembly 200 is mounted on a mounting area of a base frame 110. The cell assembly 200 may include a plurality of battery cells 220, a plurality of thermal barrier pads 230, and a heat transfer structure 250. The cell assembly 200 may be attached to the base frame 110 by a lower thermal conductive adhesive layer 310 applied on the base frame 110.

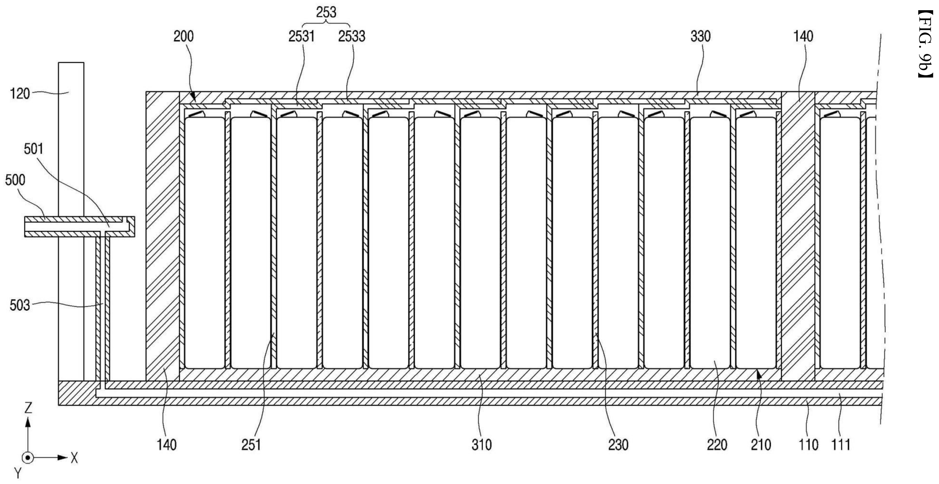

Referring to FIG. 9b, an upper thermal conductive adhesive layer 330 is formed on a plurality of thermal conductive rails 253 of the heat transfer structure 250.

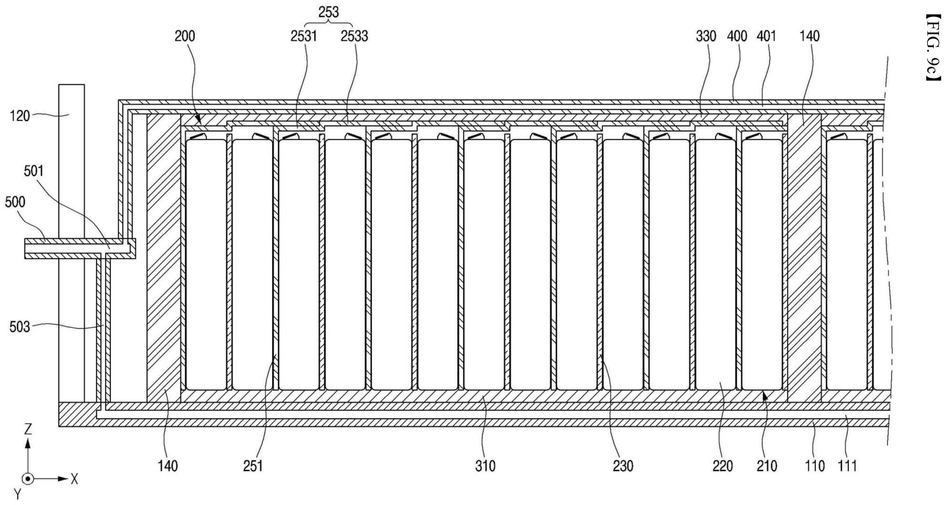

Referring to FIG. 9c, after forming the upper thermal conductive adhesive layer 330 on the plurality of thermal conductive rails 253 of the heat transfer structure 250, a cooling structure 400 is disposed on the cell assembly 200. The cooling structure 400 may be attached to the plurality of thermal conductive rails 253 of the heat transfer structure 250 by the upper thermal conductive adhesive layer 330.

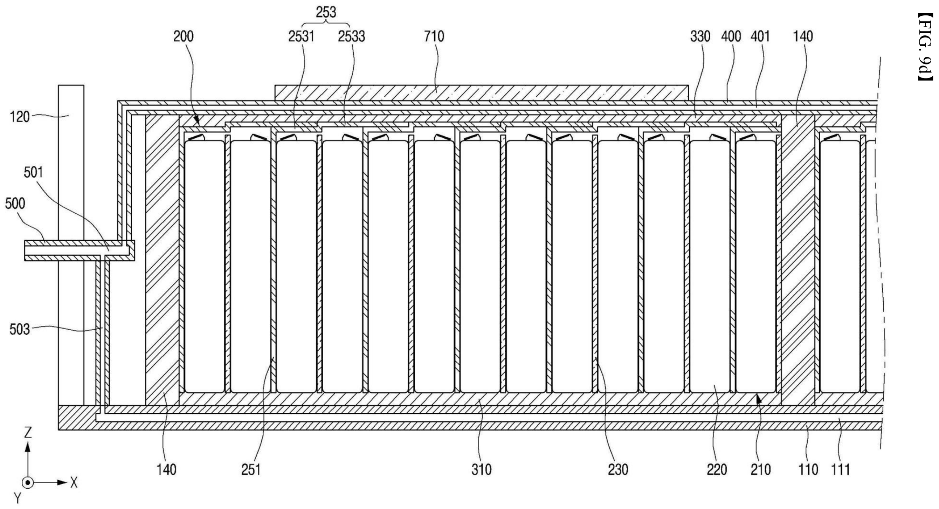

Referring to FIG. 9d, after disposing the cooling structure 400 on the cell assembly 200, a compressible pad 710 is disposed on the cooling structure 400. The compressible pad 710 may be attached to the cooling structure 400 by an adhesive member.

Referring to FIG. 1, after disposing the compressible pad 710 on the cooling structure 400, a pack cover 130 is fastened to a side frame 120.

According to exemplary embodiments of the present disclosure, since the battery pack has a dual cooling structure configured to cool battery cells 220 by flowing cooling fluid to a lower cooling channel 111 of the base frame 110 below the cell assembly 200 and a cooling channel 401 of the cooling structure 400 above the cell assembly 200, cooling performance for the battery cells 220 can be improved.

According to exemplary embodiments of the present disclosure, since outer portions of the battery cells 220 that generate relatively more heat are thermally coupled to the cooling structure 400 through the heat transfer structure 250, cooling of the outer portions of the battery cells 220 can be enhanced, and temperature deviation within the battery cells 220 can be reduced.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery pack comprising:
a base frame;
a cell block comprising a plurality of battery cells on the base frame;
a cooling structure provided on the cell block and having a first cooling channel; and
a heat transfer structure thermally connecting the cell block to the cooling structure and comprising a plurality of thermal conductive pads attached to the cell block and a plurality of thermal conductive rails attached to the cooling structure;
wherein the plurality of thermal conductive rails are arranged in a first direction on the cell block, and
two adjacent thermal conductive rails among the plurality of thermal conductive rails overlap in a second direction.

2. The battery pack of claim 1, further comprising a first thermal conductive adhesive layer that attaches each of the plurality of thermal conductive rails to the cooling structure.

3. The battery pack of claim 1, wherein the base frame comprises a second cooling channel, and
the battery pack further comprises a second thermal conductive adhesive layer that attaches each of the plurality of battery cells to the base frame.

4. The battery pack of claim 1, wherein each of the plurality of thermal conductive pads is attached to a corresponding one among the plurality of battery cells, and
each of the plurality of thermal conductive rails is integral with a corresponding one among the plurality of thermal conductive pads.

5. The battery pack of claim 1, wherein each of the plurality of thermal conductive rails comprises a first plate and a second plate positioned at different levels, and
a second plate of any one of two adjacent thermal conductive rails among the plurality of thermal conductive rails overlaps a first plate of the other one of the two adjacent thermal conductive rails among the plurality of thermal conductive rails in the second direction.

6. The battery pack of claim 5, wherein the first plate overlaps a corresponding one among the plurality of battery cells in the second direction, and
the second plate overlaps corresponding two battery cells among the plurality of battery cells in the second direction.

7. The battery pack of claim 1, wherein the cooling structure comprises a first cooling plate and a second cooling plate spaced apart with an opening therebetween, and
each of the plurality of battery cells overlaps the opening in the second direction.

8. The battery pack of claim 7, wherein the cooling structure further comprises a connecting plate extending between the first cooling plate and the second cooling plate,
the first cooling plate comprises a first channel configured to guide cooling fluid in a first flow direction,
the second cooling plate comprises a second channel configured to guide cooling fluid in a second flow direction opposite to the first flow direction, and
the connecting plate comprises a third channel extending between the first channel of the first cooling plate and the second channel of the second cooling plate, and
wherein the first cooling channel comprises the first channel, the second channel and the third channel.

9. The battery pack of claim 8, further comprising:
an inlet pipe comprising a first inlet channel communicating with the first channel of the first cooling plate and configured to deliver the cooling fluid to the first channel of the first cooling plate; and
an outlet pipe comprising a first outlet channel communicating with the second channel of the second cooling plate and configured to discharge the cooling fluid to the outside.

10. The battery pack of claim 9, wherein the base frame comprises a second cooling channel,
the inlet pipe further comprises a second inlet channel communicating with an inlet of the second cooling channel of the base frame, and
the outlet pipe further comprises a second outlet channel communicating with an outlet of the second cooling channel of the base frame.

11. The battery pack of claim 7, wherein each of the plurality of battery cells comprises:
a center portion overlapping the opening of the cooling structure in the second direction; and
an outer portion overlapping one of the first cooling plate and the second cooling plate in the second direction and to which an electrode lead is connected.

12. The battery pack of claim 11, wherein the plurality of battery cells is arranged in the first direction, and
each of the plurality of battery cells extends in a third direction perpendicular to the first direction and the second direction.

13. The battery pack of claim 1, further comprising:
an internal frame disposed on the base frame and disposed at one side of the cell block; and
a fixing bracket fixing the cooling structure to the internal frame.

14. The battery pack of claim 1, further comprising: a pack cover covering the cell block and the cooling structure; and
a compressible pad provided between the cooling structure and the pack cover.

15. The battery pack of claim 1, further comprising:
a pack cover covering the cell block and the cooling structure;
a bolt attached to the cooling structure and inserted into a hole of the pack cover; and
a nut fastened to a protruding portion of the bolt protruding from the pack cover.
